(19) **Europäisches Patentamt / European Patent Office / Office européen des brevets**

(11) **EP 4 507 403 A1**

(12) **EUROPEAN PATENT APPLICATION**

(43) Date of publication:
**12.02.2025 Bulletin 2025/07**

(21) Application number: **24193740.8**

(22) Date of filing: **08.08.2024**

(51) International Patent Classification (IPC):
**H04W 52/38** (2009.01)

(52) Cooperative Patent Classification (CPC):
**H04W 52/38**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 KR 20230105804
29.07.2024 KR 20240100365**

(71) Applicant: **KT Corporation
Seongnam-si, Gyeonggi-do 13606 (KR)**

(72) Inventor: **PARK, Kyujin
13606 Seongnam-si (KR)**

(74) Representative: **Brevalex
Tour Trinity
1 B Place de la Défense
92400 Courbevoie (FR)**

(54) **METHOD AND DEVICE FOR TRANSMITTING/RECEIVING UPLINK CONTROL CHANNEL IN FULL-DUPLEX COMMUNICATION**

(57) Provided is a method, performed by a user equipment (UE), of transmitting a physical uplink control channel (PUCCH) in full-duplex communication. The method may include receiving at least one power control parameter set used to determine transmission power of the PUCCH from a base station, determining the transmission power of the PUCCH based on the at least one power control parameter set, and transmitting the PUCCH according to the determined transmission power, wherein the transmission power of the PUCCH is separately determined for a case where a symbol for transmitting the PUCCH is a subband full duplex (SBFD) symbol and a case where the symbol is a non-SBFD symbol.

## FIG.8

*800*

- start
- receive power control parameter set — S810
- determine transmission power of uplink control channel — S820
- transmit uplink control channel — S830
- end

EP 4 507 403 A1

# FIG.10

**Description**

## CROSS REFERENCE TO RELATED APPLICATION

This application claims priority from Korean Patent Application Nos. 10-2023-0105804, filed on August 11, 2023, and 10-2024-0100365, filed on July 29, 2024, which are hereby incorporated by reference for all purposes as if fully set forth herein.

## BACKGROUND

### Field

The present disclosure relates to a method and device for transmitting/receiving an uplink control channel in full-duplex communication in a next-generation radio access network (which means "5G", "new radio (NR)", "5G-advanced", "6G" or post-6G 3GPP radio access network in the disclosure).

### Description of Related Art

The 3$^{rd}$ generation partnership project (3GPP) continues research and development of wireless communication technology. As representative usage scenarios of NR, enhancement mobile broadband (eMBB), massive machine type communication (mMTC), and ultra-reliable and low latency communications (URLLC) have been defined. To meet the requirements for each usage scenario, a more flexible frame structure needs to be designed.

Accordingly, research is continuing on methods for efficiently meeting the needs of data rates, latency, reliability, and coverage for each usage scenario.

As part of this research, a specific design is needed to efficiently and optimally control the transmission power of the uplink control channel during the time period in which full-duplex communication is applied in the wireless network.

### BRIEF SUMMARY

Embodiments of the disclosure may provide a method and device for transmitting/receiving an uplink control channel in full-duplex communication.

In an aspect, the present embodiments may provide a method, performed by a user equipment (UE), of transmitting a physical uplink control channel (PUCCH) in full-duplex communication. The method may include receiving at least one power control parameter set used to determine transmission power of the PUCCH from a base station, determining the transmission power of the PUCCH based on the at least one power control parameter set, and transmitting the PUCCH according to the determined transmission power, wherein the transmission power of the PUCCH is separately determined for a case where a symbol for transmitting the PUCCH is a subband full duplex (SBFD) symbol and a case where the symbol is a non-SBFD symbol.

In another aspect, the present embodiments may provide a method, performed by a base station, of receiving a physical uplink control channel (PUCCH) in full-duplex communication. The method may include transmitting, to a UE, at least one power control parameter set used to determine transmission power of the PUCCH, and receiving the PUCCH according to the transmission power of the PUCCH determined based on the at least one power control parameter set, wherein the transmission power of the PUCCH is separately determined for a case where a symbol for receiving the PUCCH is a subband full duplex (SBFD) symbol and a case where the symbol is a non-SBFD symbol.

In an aspect, the present embodiments may provide a user equipment (UE) transmitting a physical uplink control channel (PUCCH) in full-duplex communication. The UE may include a transmitter, a receiver, and a controller controlling an operation of the transmitter and the receiver, wherein the controller receives at least one power control parameter set used to determine transmission power of the PUCCH from a base station, determines the transmission power of the PUCCH based on the at least one power control parameter set, and transmits the PUCCH according to the determined transmission power, and wherein the transmission power of the PUCCH is separately determined for a case where a symbol for transmitting the PUCCH is a subband full duplex (SBFD) symbol and a case where the symbol is a non-SBFD symbol.

In another aspect, the present embodiments may provide a base station receiving a physical uplink control channel (PUCCH) in full-duplex communication. The base station may include a transmitter, a receiver, and a controller controlling an operation of the transmitter and the receiver, wherein the controller transmits, to a UE, at least one power control parameter set used to determine transmission power of the PUCCH, and receives the PUCCH according to the transmission power of the PUCCH determined based on the at least one power control parameter set, and wherein the transmission power of the PUCCH is separately determined for a case where a symbol for receiving the PUCCH is a subband full duplex (SBFD) symbol and a case where the symbol is a non-SBFD symbol.

According to the present embodiments, the transmission power of an PUCCH may be efficiently adjusted in a slot or symbol to which full-duplex communication is applied.

## DESCRIPTION OF DRAWINGS

The above and other aspects, features, and advantages of the disclosure will be more apparent from the following detailed description taken in conjunction with the accompanying drawings, in which:

FIG. 1 is a view schematically illustrating an NR wireless communication system in accordance with embodiments of the disclosure;

FIG. 2 is a view schematically illustrating a frame structure in an NR system in accordance with embodiments of the disclosure;

FIG. 3 is a view for explaining resource grids supported by a radio access technology in accordance with embodiments of the disclosure;

FIG. 4 is a view for explaining bandwidth parts supported by a radio access technology in accordance with embodiments of the disclosure;

FIG. 5 is a view illustrating an example of a synchronization signal block in a radio access technology in accordance with embodiments of the disclosure;

FIG. 6 is a signal diagram for explaining a random access procedure in a radio access technology in accordance with embodiments of the disclosure;

FIG. 7 is a view for explaining CORESET;

FIG. 8 is a flowchart illustrating a method of a UE for transmitting an uplink control channel in full-duplex communication according to an embodiment;

FIG. 9 is a flowchart illustrating a method of a base station for receiving an uplink control channel in full-duplex communication according to an embodiment;

FIGS. 10 and 11 are views illustrating a TDD frame in which an uplink subband is configured in a downlink slot according to an embodiment;

FIG. 12 is a block diagram illustrating a UE according to an embodiment; and

FIG. 13 is a block diagram illustrating a base station according to an embodiment.

## DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

<Overview of NR System>

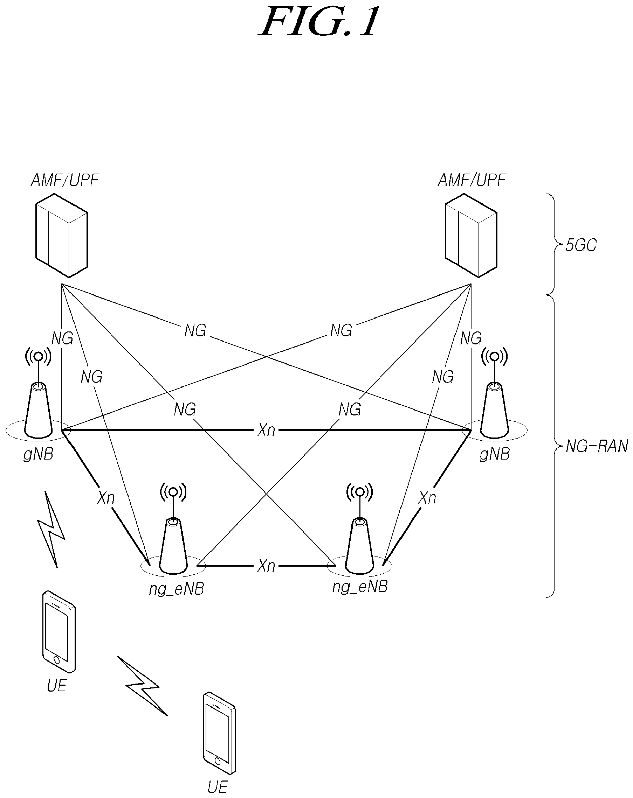

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

<NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "$\mu$" is used as an exponential value of 2 so as to be changed exponentially on the basis of 15 kHz.

[Table 1]

| $\mu$ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

As shown in Table 1 above, NR may have five types of numerologies according to subcarrier spacing. This is different from LTE, which is one of the 4G-communication technologies, in which the subcarrier spacing is fixed to 15 kHz.

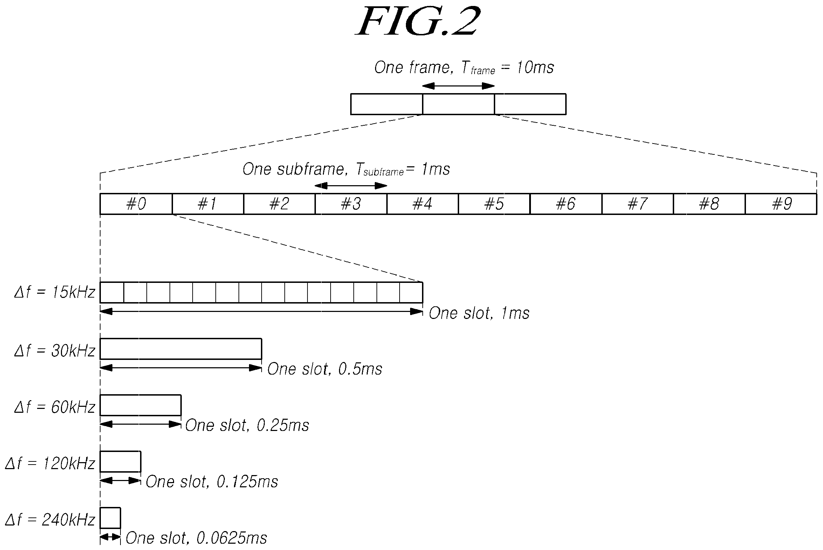

Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

<Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

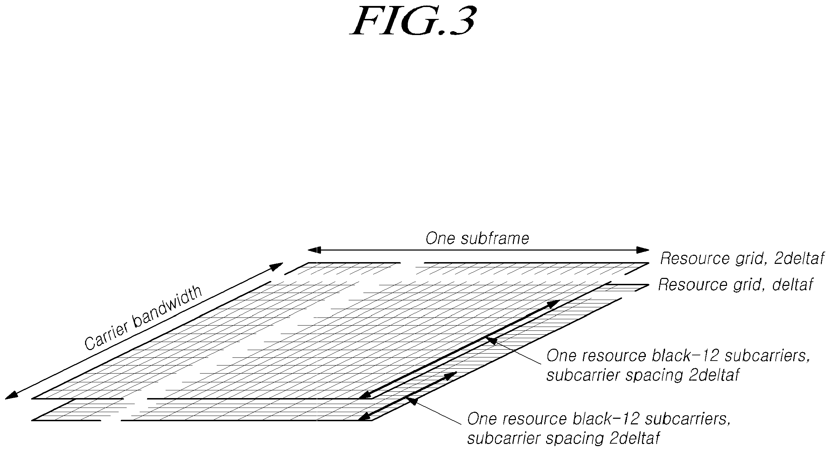

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

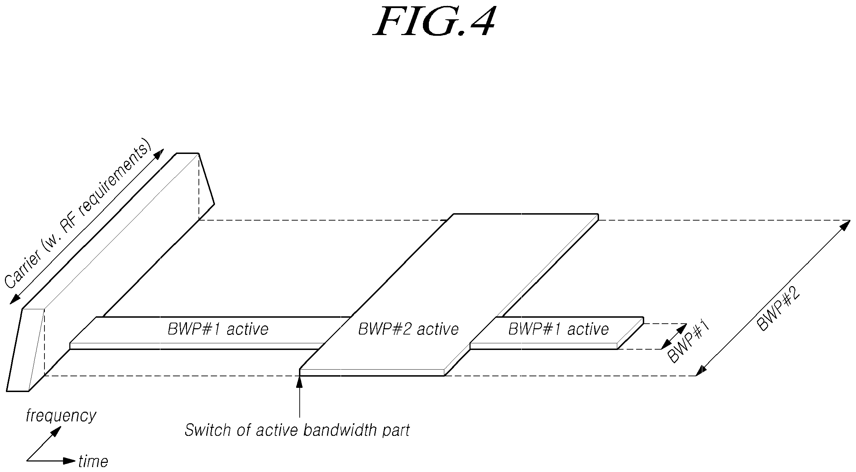

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

<Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

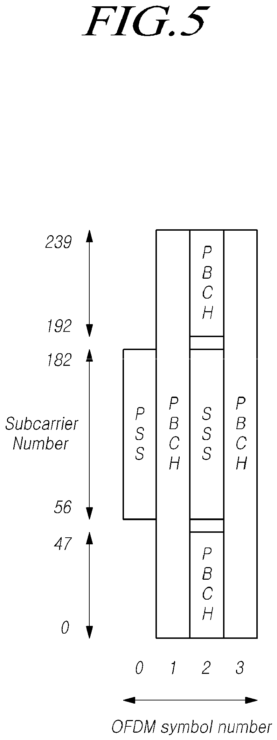

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB 1), and the like. The SIB 1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB1, the UE must receive numerology information used for the SIB1 transmission and the CORESET (control resource set) information used for scheduling of SIB 1 over a PBCH. The UE identifies scheduling information for SIB1 using SI-RNTI in the CORESET. The UE acquires SIB 1 on the PDSCH according to scheduling information. The remaining SIBs other than SIB1 may be periodically transmitted, or the remaining SIBs may be transmitted according to the request of the UE.

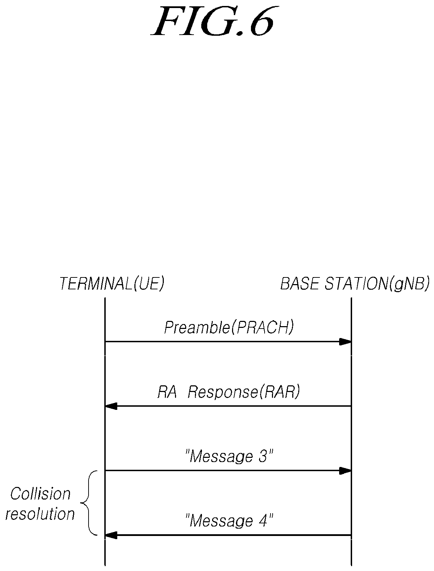

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

<NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

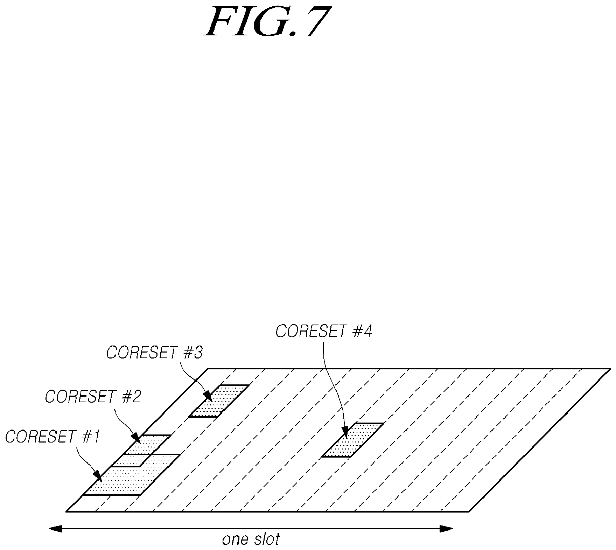

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

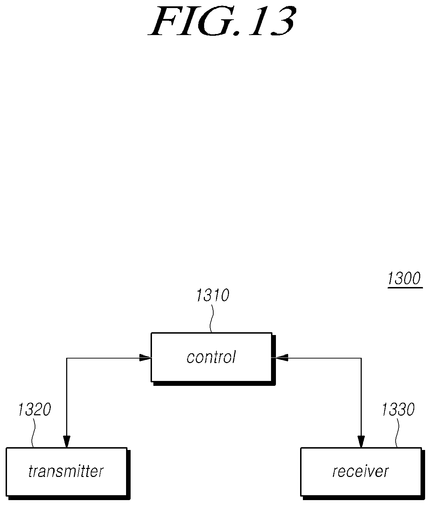

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 13, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method of transmitting/receiving an uplink control channel in full-duplex communication will be described with reference to the related drawings.

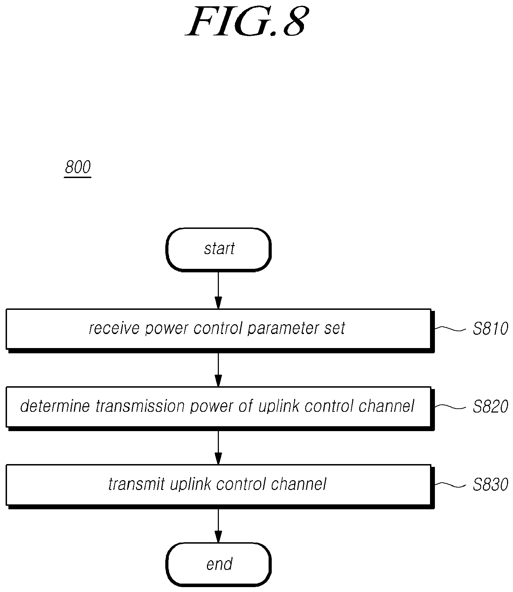

FIG. 8 is a flowchart illustrating a method of a UE for transmitting an uplink control channel in full-duplex communication according to an embodiment.

Referring to FIG. 8, the UE may receive at least one power control parameter set used to determine transmission power of an uplink control channel from the base station (S810).

The UE may receive time division duplex (TDD) configuration information. The TDD divides and uses time-domain radio resources into a downlink slot and an uplink slot. The UE may receive the TDD configuration information from the base station to determine the format of the symbol in the slot. In this case, the TDD configuration information may include configuration information about the format of the slot. The configuration information for determining the format of the symbol in the slot, and the corresponding information may be received through higher layer signaling or physical layer L1 signaling.

In other words, a downlink symbol, an uplink symbol, and a flexible symbol in which the transmission direction is not determined may be configured through an RRC message for configuring a corresponding UL-DL slot. Further, the UE may receive UE-specific RRC signaling in which flexible symbols among symbols configured through cell-specific RRC signaling are reallocated to uplink symbols, downlink symbols, or flexible symbols for each UE.

Alternatively, the UE may receive an indication of a dynamic slot format through a UE-group common PDCCH. According to an embodiment, the UE may dynamically receive the slot format through DCI format 2_0.

Further, the TDD configuration information may include information about a reference subcarrier spacing (SCS), pattern 1, and pattern 2 that may be applied to the serving cell. In this case, the TDD configuration information may provide only pattern 1 or may provide pattern 1 and pattern 2. The TDD configuration information may include slot configuration period information about each pattern. The UE may set the slot format per slot for a first number of slots as indicated by pattern 1 and, when pattern 2 is provided, may set the slot format per slot for a second number of slots as indicated by pattern 2.

The UE may receive subband full duplex (SBFD) subband configuration information. Full-duplex communication is a technique in which the base station simultaneously performs downlink transmission and uplink reception in the same radio resource. The UE may simultaneously perform downlink reception and uplink transmission. When the base station supports full-duplex communication based on subband non-overlapping, a specific frequency resource in the same symbol in the TDD carrier may be used for downlink transmission, and another frequency resource may be used for uplink reception. In other words, for the TDD carrier, some frequency resources may be utilized for uplink transmission of the UE in any downlink slot or downlink symbol, or some frequency resources may be utilized like a flexible symbol for downlink/uplink transition.

To that end, the UE may receive SBFD subband configuration information for full-duplex communication. In other words, the UE may receive configuration information for configuring a downlink subband in an uplink slot or for configuring an uplink subband in a downlink slot. The SBFD subband configuration information may include time-domain information and frequency-domain information where an uplink subband or a downlink subband is configured. Alternatively, the subband configuration information may include information about frequency-domain information and time-domain information where a guard band is configured. Here, the frequency resource information may include contiguous resource block allocation information, and the time resource information may include contiguous SBFD symbol allocation information.

To configure the SBFD subband, the time resource information for the uplink subband may be configured based on reference SCS information and pattern configuration information. In this case, the time resource information may be configured based on reference subcarrier spacing (SCS) included in the TDD configuration information. In other words, as described above, the reference subcarrier spacing configuration included in the TDD configuration information may be used as a reference SCS for configuring a time resource for configuring an uplink subband.

Further, the time resource information may be configured based on the number of TDD patterns included in the TDD configuration information and the period of the pattern. In other words, as described above, the configuration for pattern 1 and pattern 2 included in the TDD configuration information may be used as pattern configuration information for configuring a time resource for configuring an uplink subband.

In this case, the SBFD symbol allocation information may be configured as contiguous SBFD symbols within a period of TDD patterns set as one or two. Each pattern configuration information may include periodic configuration information, offset information, and duration information about the corresponding pattern. In this case, the duration information may be set as the number of contiguous SBFD symbols from the offset, or the duration information may be set as a combination of the number of contiguous SBFD slots and the number of contiguous SBFD symbols. Alternatively, according to an example, the corresponding offset may be set as an end point rather than a start point. In other words, offset information corresponding to the corresponding end point and duration information from the corresponding end point may be configured.

For the SBFD subband configuration, the frequency resource configuration information for the uplink subband may be configured in units of a common resource block (CRB). In this case, the frequency resource configuration for the uplink subband may be accompanied by a guard band configuration or a downlink subband configuration in the same symbol/slot. In other words, the frequency resource configuration information for the uplink subband may include at least one of the frequency resource configuration information about the downlink subband or the guard band accompanied in the SBFD slot or SBFD symbol where the uplink subband is configured. In this case, the time resource configuration information for the guard band or the downlink subband may be configured to follow the time resource configuration information about the uplink subband.

According to an embodiment, for configuring the SBFD subband, the frequency resource information for the uplink subband may include configuration information for one uplink subband and one or two guard bands based on the CRB. In this case, when the uplink subband is positioned in the center of the frequency band, two guard bands may be configured above and below the corresponding uplink subband. Alternatively, when the uplink subband is positioned at the upper boundary of the frequency band, one guard band may be configured under the corresponding uplink subband. Alternatively, when the uplink subband is positioned at the lower boundary of the frequency band, one guard band may be configured above the corresponding uplink subband. Accordingly, configuration information for one or two guard bands may be included in the frequency resource information. In this case, the downlink subband may be configured with the guard band interposed therebetween, and the downlink subband may be inferred by frequency resource information about the uplink subband and the guard band.

According to another embodiment, for configuring the SBFD subband, the frequency resource information for the uplink subband may include configuration information for one uplink subband and one or two downlink subbands based on the CRB. In this case, when the uplink subband is positioned in the center of the frequency band, two downlink subbands may be configured at an upper portion and a lower portion of the corresponding uplink subband. Alternatively, when the uplink subband is positioned at the upper boundary of the frequency band, one downlink subband may be configured under the corresponding uplink subband. Alternatively, when the uplink subband is positioned at the lower boundary of the frequency band, one downlink subband may be configured above the corresponding uplink subband. Accordingly, configuration information for one or two downlink subbands may be included in the frequency resource information. In this case, the guard band may be configured between the uplink subband and the downlink subband, and the guard band may be inferred by frequency resource information for the uplink subband and downlink subband.

According to an embodiment, SBFD subband configuration information may be received through cell-specific higher layer signaling. In other words, the UE may receive SBFD subband configuration information from the base station through cell-specific RRC signaling. The UE may receive TDD configuration information and SBFD subband configuration information and configure the format for each slot.

The UE may be configured or instructed to transmit the uplink control channel from the base station. In this case, the transmission of the uplink control channel may include the UE's HARQ-ACK feedback information, scheduling request (SR) information, CSI feedback information, and all other uplink control information (UCI) that may be transmitted through PUCCH. The UE may determine the transmission power to transmit the uplink control channel according to the configuration or instruction of the base station. To that end, the UE may use at least one power control parameter set received from the base station.

When the transmission of the uplink control channel is scheduled through the slot i in the activation uplink bandwidth part b of the carrier f of the serving cell c to which the UE is connected, the transmission power of the uplink control channel may be determined by Equation 1 below. The power control parameter set may include a parameter or a parameter set for each of the parameters constituting Equation 1.

[Equation 1]

$$P_{\text{PUCCH},b,f,c}(i,q_u,q_d,l) = \min \begin{cases} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) - \Delta_{\text{F\_PUCCH}}(F) + \Delta_{\text{TF},b,f,c}(i) + g_{b,f,c}(i,l) \end{cases}$$

[dBm]

Here, $P_{CMAX,f,c}(i)$ is a maximum transmission power value parameter allowed in the corresponding frequency carrier. Further, $P_{O\_PUCCH,b,f,c}(q_u)$ is the target reception power parameter in the base station, . $PL_{b,f,c}(q_d)$ is a parameter for pathloss compensation, and the two parameters are open-loop power control-related parameters. According to an embodiment, the maximum transmission power value parameter and open-loop power control-related parameter may be received through higher layer signaling, such as RRC signaling. Alternatively, the parameters may be calculated based on other parameters received through higher layer signaling.

$$g_{b,f,c}(i, l) = g_{b,f,c}(i - i_0, l) + \sum_{m=0}^{C(C_i)-1} \delta_{\text{PUCCH},b,f,c}(m, l)$$

Further, is a parameter related to closed-loop power control that is adjusted according to the transmit power control (TPC) command value indicated from the base station.

Further, $M_{\text{RB},b,f,c}^{\text{PUCCH}}(i)$, $\Delta_{F\_PUCCH}(F)$ and $\Delta_{\text{TF},b,f,c}(i)$ are parameters reflecting the uplink control channel bandwidth, power offset value for each PUCCH format, and coding rate.

In this case, the above-described parameters may be distinctly configured depending on whether the type of symbol for transmitting the uplink control channel is an SBFD symbol or a non-SBFD symbol. Therefore, the power control parameter set may include parameters or parameter sets for when the symbol is the SBFD symbol and when the symbol is the non-SBFD symbol.

Referring back to FIG. 8, the UE may determine the transmission power of the uplink control channel based on at least one power control parameter set (S820) and transmit the uplink control channel according to the determined transmission power (S830).

The transmission power of the uplink control channel may be determined separately for when the symbol for transmitting the uplink control channel is the SBFD symbol and when the symbol is the non-SBFD symbol. In other words, the UE may determine the transmission power for transmitting the uplink control channel to differ depending on the type of the symbol allocated to transmission of the uplink control channel. To that end, the UE may determine the transmission power by selecting the parameter according to the type of the symbol where the uplink control channel is to be transmitted of the parameter for when the symbol is the SBFD symbol included in the power control parameter set and the parameter for when the symbol is the non-SBFD symbol.

According to an embodiment, the transmission power of the uplink control channel may be determined based on the maximum PUCCH transmission power parameter configured separately for when it is the SBFD symbol and when it is the non-SBFD symbol. In other words, the maximum PUCCH transmission power parameter each may be configured for the type of the symbol for transmitting the uplink control channel and be included in one power control parameter set.

Accordingly, when the uplink control channel is transmitted in the non-SBFD symbol, the UE may determine the transmission power by applying the maximum transmission power value parameter corresponding to the non-SBFD symbol. When the uplink control channel is transmitted in the SBFD symbol, the UE may determine the transmission power by applying the maximum transmission power value parameter corresponding to the SBFD symbol.

According to another embodiment, the transmission power of the uplink control channel may be determined based on at least one open-loop power control parameter configured separately for when it is the SBFD symbol and when it is the non-SBFD symbol. In other words, the open-loop power control parameter each may be configured for the type of the symbol for transmitting the uplink control channel and be included in one power control parameter set.

As described above, the open-loop power control parameter may include the target reception power parameter in the base station. Further, the open-loop power control parameter may include a parameter for the downlink pathloss obtained by measuring a specific downlink reference signal.

Accordingly, when the uplink control channel is transmitted in the non-SBFD symbol, the UE may determine the transmission power by applying the open-loop power control parameter corresponding to the non-SBFD symbol. When the uplink control channel is transmitted in the SBFD symbol, the UE may determine the transmission power by applying at least one open-loop power control parameter corresponding to the SBFD symbol.

Further, the transmission power of the uplink control channel may be determined based on the pathloss measurement value for the reference signal configured separately for when it is the SBFD symbol and when it is the non-SBFD symbol. In other words, the reference signal that is the target for measuring pathloss may be configured to differ depending on the type of symbol.

In this case, the reference signal may be received through the same type of symbol as the symbol for transmitting the uplink control channel. For example, when CSI-RS is used as a reference signal, if the symbol for transmitting the uplink control channel is a non-SBFD symbol, the UE may measure pathloss only for the CSI-RS received through the non-SBFD symbol. If the symbol for transmitting the uplink control channel is the SBFD symbol, the UE may measure pathloss only for the received CSI-RS through the SBFD symbol.

According to another embodiment, the transmission power of the uplink control channel may be determined based on the closed-loop power control command indicated separately for when it is the SBFD symbol and when it is the non-SBFD symbol. In other words, at least one closed-loop power control command each may be configured for the type of the symbol for transmitting the uplink control channel and be included in one power control parameter set.

In this case, the closed-loop power control command may be indicated through a transmit power control (TPC) command each separately configured for when it is the SBFD symbol and when it is the non-SBFD symbol or through a TPC command including symbol type indication information. For example, the parameter determined by the TPC command may be used to determine the closed-loop power control-related parameter of Equation 1.

According to another embodiment, the transmission power of the uplink control channel may be determined based on a power offset value configured for when it is the SBFD symbol. In other words, the power offset value may be configured when the type of the symbol for transmitting the uplink control channel is the SBFD symbol and be included in one power control parameter set.

Accordingly, when the uplink control channel is transmitted in the non-SBFD symbol, the UE may determine the transmission power without applying a separate power offset value. When the uplink control channel is transmitted in the SBFD symbol, the UE may determine the transmission power by applying the power offset value corresponding to the SBFD symbol.

For example, when transmitting the uplink control channel in the SBFD symbol, the UE may add or subtract the power offset value to/from Equation 1. Alternatively, when transmitting the uplink control channel in the SBFD symbol, the UE may multiply the power offset value by Equation 1. Alternatively, when transmitting the uplink control channel in the SBFD symbol, the UE may apply the power offset value to at least one of the parameters constituting Equation 1. In this case, the power offset value may be configured individually for each of the parameters constituting Equation 1.

The embodiments have described as discerning and applying each parameter constituting Equation 1 according to the type of the symbol. These embodiments may be applied independently, or two or more embodiments may be combined and applied.

According to the embodiments described above, the transmission power of an uplink control channel may be efficiently adjusted in a slot or symbol to which full-duplex communication is applied.

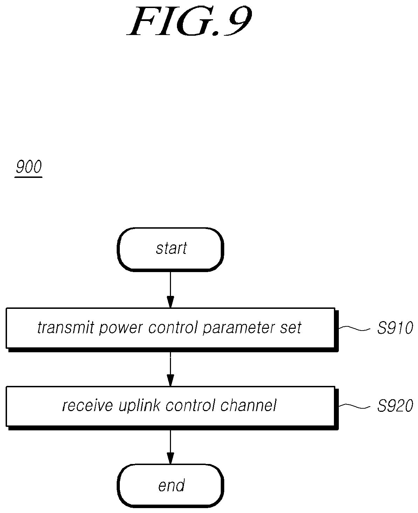

FIG. 9 is a flowchart illustrating a method of a base station for receiving an uplink control channel in full-duplex communication according to an embodiment. The description made in connection with FIG. 8 may be omitted to avoid redundant description. In that case, the omitted content may be applied in substantially the same manner to the base station as long as it does not contradict the technical spirit of the disclosure.

Referring to FIG. 9, the base station may receive at least one power control parameter set used to determine transmission power of an uplink control channel to the UE (S910).

The base station may transmit time division duplex (TDD) configuration information. The TDD divides and uses time-domain radio resources into a downlink slot and an uplink slot, and the base station may transmit the TDD configuration information to the UE to determine the format of the symbol in the slot. In this case, the TDD configuration information may include configuration information about the format of the slot and configuration information for determining the format of the symbol in the slot, and the corresponding information may be received through higher layer signaling or physical layer L1 signaling.

In other words, a downlink symbol, an uplink symbol, and a flexible symbol in which the transmission direction is not determined of a predetermined period may be configured through an RRC message for configuring a corresponding UL-DL slot. Further, the base station may transmit UE-specific RRC signaling in which flexible symbols among symbols configured through cell-specific RRC signaling are reallocated to uplink symbols, downlink symbols, or flexible symbols for each UE.

Alternatively, the base station may indicate a dynamic slot format through a UE-group common PDCCH. According to an embodiment, the base station may dynamically indicate the slot format through DCI format 2_0.

Further, the TDD configuration information may include information about a reference subcarrier spacing (SCS), pattern 1, and pattern 2 that may be applied to the serving cell. In this case, the TDD configuration information may provide only pattern 1 or may provide pattern 1 and pattern 2. The TDD configuration information may include slot configuration period information about each pattern. The UE may set the slot format per slot for a first number of slots as indicated by pattern 1. When pattern 2 is provided, may set the slot format per slot for a second number of slots as indicated by pattern 2.

The base station may transmit subband full duplex (SBFD) subband configuration information. Full-duplex communication is a technique in which the base station simultaneously performs downlink transmission and uplink reception in the same radio resource. The UE side may simultaneously perform downlink reception and uplink transmission. When the base station supports full-duplex communication based on subband non-overlapping, a specific frequency resource in the same symbol in the TDD carrier may be used for downlink transmission, and another frequency resource may be used for uplink reception. In other words, for the TDD carrier, some frequency resources may be utilized for uplink transmission of the UE in any downlink slot or downlink symbol, or some frequency resources may be utilized like a flexible symbol for downlink/uplink transition.

To that end, the base station may transmit SBFD subband configuration information for full-duplex communication. In other words, the base station may transmit configuration information for configuring a downlink subband in an uplink slot or an uplink subband in a downlink slot. The SBFD subband configuration information may include time-domain information and frequency-domain information where an uplink subband or a downlink subband is configured. Alternatively, the subband configuration information may include information about frequency-domain information and time-domain information where a guard band is configured. Here, the frequency resource information may include contiguous resource block allocation information, and the time resource information may include contiguous SBFD symbol allocation information.

To configure the SBFD subband, the time resource information for the uplink subband may be configured based on reference SCS information and pattern configuration information. In this case, the time resource information may be configured based on reference subcarrier spacing (SCS) included in the TDD configuration information. In other words, as described above, the reference subcarrier spacing configuration included in the TDD configuration information may be used as a reference SCS for configuring a time resource for configuring an uplink subband.

Further, the time resource information may be configured based on the number of TDD patterns included in the TDD configuration information and the period of the pattern. In other words, as described above, the configuration for pattern 1 and pattern 2 included in the TDD configuration information may be used as pattern configuration information for configuring a time resource for configuring an uplink subband.

In this case, the SBFD symbol allocation information may be configured as contiguous SBFD symbols within a period of TDD patterns set as one or two. Each pattern configuration information may include periodic configuration information, offset information, and duration information about the corresponding pattern. In this case, the duration information may be set as the number of contiguous SBFD symbols from the offset, or the duration information may be set as a combination of the number of contiguous SBFD slots and the number of contiguous SBFD symbols. Alternatively, according to an embodiment, the corresponding offset may be set as an end point rather than a start point. In other words, offset information corresponding to the corresponding end point and duration information from the corresponding end point may be configured.

For the SBFD subband configuration, the frequency resource configuration information for the uplink subband may be configured in units of a common resource block (CRB). In this case, the frequency resource configuration for the uplink subband may be accompanied by a guard band configuration or a downlink subband configuration in the same symbol/slot. In other words, the frequency resource configuration information for the uplink subband may include at least one of the frequency resource configuration information about the downlink subband or the guard band accompanied in the SBFD slot or SBFD symbol where the uplink subband is configured. In this case, the time resource configuration information for the guard band or the downlink subband may be configured to follow the time resource configuration information about the uplink subband.

According to an embodiment, for configuring the SBFD subband, the frequency resource information for the uplink subband may include configuration information for one uplink subband and one or two guard bands based on the CRB. In this case, when the uplink subband is positioned in the center of the frequency band, two guard bands may be configured above and below the corresponding uplink subband. Alternatively, when the uplink subband is positioned at the upper boundary of the frequency band, one guard band may be configured under the corresponding uplink subband. Alternatively, when the uplink subband is positioned at the lower boundary of the frequency band, one guard band may be configured above the corresponding uplink subband. Accordingly, configuration information for one or two guard bands may be included in the frequency resource information. In this case, the downlink subband may be configured with the guard band interposed therebetween, and the downlink subband may be inferred by frequency resource information about the uplink subband and the guard band.

According to another embodiment, for configuring the SBFD subband, the frequency resource information for the uplink subband may include configuration information for one uplink subband and one or two downlink subbands based on the CRB. In this case, when the uplink subband is positioned in the center of the frequency band, two downlink subbands may be configured at an upper portion and a lower portion of the corresponding uplink subband. Alternatively, when the uplink subband is positioned at the upper boundary of the frequency band, one downlink subband may be configured under the corresponding uplink subband. Alternatively, when the uplink subband is positioned at the lower boundary of the frequency band, one downlink subband may be configured above the corresponding uplink subband. Accordingly, configuration information for one or two downlink subbands may be included in the frequency resource information. In this case, the guard band may be configured between the uplink subband and the downlink subband, and the guard band may be inferred by frequency resource information for the uplink subband and downlink subband.

According to an embodiment, SBFD subband configuration information may be received through cell-specific higher layer signaling. In other words, the base station may transmit SBFD subband configuration information through cell-specific RRC signaling. The UE may receive TDD configuration information and SBFD subband configuration information and configure the format for each slot.

The base station may configure or instruct the UE to transmit the uplink control channel. In this case, the transmission of the uplink control channel may include the UE's HARQ-ACK feedback information, scheduling request (SR) information, CSI feedback information, and all other uplink control information (UCI) that may be transmitted through PUCCH. The UE may determine the transmission power to transmit the uplink control channel according to the configuration or instruction of the base station. To that end, the base station may transmit at least one power control parameter set to be used for the UE to determine transmission power.

When the transmission of the uplink control channel is scheduled through the slot i in the activation uplink bandwidth part b of the carrier f of the serving cell c to which the UE is connected, the transmission power of the uplink control channel may be determined by Equation 1 described above. The power control parameter set may include a parameter or a parameter set for each of the parameters constituting Equation 1. The description related to Equation 1 has been made above in connection with FIG. 8, and will be not repeated below.

The above-described parameters may be distinctly configured depending on whether the type of symbol for transmitting the uplink control channel is an SBFD symbol or a non-SBFD symbol. Therefore, the power control parameter set may include parameters or parameter sets for when the symbol is the SBFD symbol and when the symbol is the non-SBFD symbol.

Referring back to FIG. 9, the base station may receive the uplink control channel according to the transmission power of the uplink control channel determined based on at least one power control parameter set (S920).

The transmission power of the uplink control channel may be determined separately for when the symbol for transmitting the uplink control channel is the SBFD symbol and when the symbol is the non-SBFD symbol. In other words, the UE may determine the transmission power for transmitting the uplink control channel to differ depending on the type of the symbol allocated to transmission of the uplink control channel. To that end, the UE may determine the transmission power by selecting the parameter according to the type of the symbol for transmitting the uplink control channel from the parameter for when the symbol is the SBFD symbol included in the power control parameter set and the parameter for when the symbol is the non-SBFD symbol.

According to an embodiment, the transmission power of the uplink control channel may be determined based on the maximum PUCCH transmission power parameter configured separately for when it is the SBFD symbol and when it is the non-SBFD symbol. In other words, the base station may configure the maximum PUCCH transmission power parameter each for the type of the symbol for transmitting the uplink control channel and include and transmit the same in one power control parameter set.

Accordingly, when the uplink control channel is transmitted in the non-SBFD symbol, the UE may determine the transmission power by applying the maximum transmission power value parameter corresponding to the non-SBFD symbol. When the uplink control channel is transmitted in the SBFD symbol, the UE may determine the transmission power by applying the maximum transmission power value parameter corresponding to the SBFD symbol.

According to another embodiment, the transmission power of the uplink control channel may be determined based on at least one open-loop power control parameter configured separately for when it is the SBFD symbol and when it is the non-SBFD symbol. In other words, the base station may configure at least one open-loop power control parameter each for the type of the symbol for transmitting the uplink control channel and include and transmit the same in one power control parameter set.

As described above, the open-loop power control parameter may include the target reception power parameter in the base station. Further, the open-loop power control parameter may include a parameter for the downlink pathloss obtained by measuring a specific downlink reference signal.

Accordingly, when the uplink control channel is transmitted in the non-SBFD symbol, the UE may determine the transmission power by applying the open-loop power control parameter corresponding to the non-SBFD symbol. When the uplink control channel is transmitted in the SBFD symbol, the UE may determine the transmission power by applying at least one open-loop power control parameter corresponding to the SBFD symbol.

Further, the transmission power of the uplink control channel may be determined based on the pathloss measurement value for the reference signal configured separately for when it is the SBFD symbol and when it is the non-SBFD symbol. In other words, the reference signal that is the target for measuring pathloss may be configured to differ depending on the type of symbol.

In this case, the reference signal may be transmitted through the same type of symbol as the symbol through which the uplink control channel is received. For example, when CSI-RS is used as a reference signal, if the symbol for transmitting the uplink control channel is a non-SBFD symbol, the UE may measure pathloss only for the CSI-RS received through the non-SBFD symbol. If the symbol for transmitting the uplink control channel is the SBFD symbol, the UE may measure pathloss only for the received CSI-RS through the SBFD symbol.

According to another embodiment, the transmission power of the uplink control channel may be determined based on the closed-loop power control command indicated separately for when it is the SBFD symbol and when it is the non-SBFD symbol. In other words, the base station may configure at least one closed-loop power control command each for the type of the symbol for transmitting the uplink control channel and include and transmit the same in one power control parameter set.

In this case, the closed-loop power control command may be indicated through a transmit power control (TPC) command each separately configured for when it is the SBFD symbol and when it is the non-SBFD symbol or through a TPC command including symbol type indication information. For example, the parameter determined by the TPC command may be used to determine the closed-loop power control-related parameter of Equation 1.

According to another embodiment, the transmission power of the uplink control channel may be determined based on a power offset value configured for when it is the SBFD symbol. In other words, the base station may configure the power offset value when the type of the symbol for transmitting the uplink control channel is the SBFD symbol and include and transmit the same in one power control parameter set.

Accordingly, when the uplink control channel is transmitted in the non-SBFD symbol, the UE may determine the transmission power without applying a separate power offset value. When the uplink control channel is transmitted in the SBFD symbol, the UE may determine the transmission power by applying the power offset value corresponding to the SBFD symbol.

For example, when transmitting the uplink control channel in the SBFD symbol, the UE may add or subtract the power offset value to/from Equation 1. Alternatively, when transmitting the uplink control channel in the SBFD symbol, the UE may multiply the power offset value by Equation 1. Alternatively, when transmitting the uplink control channel in the SBFD symbol, the UE may apply the power offset value to at least one of the parameters constituting Equation 1. In this case, the power offset value may be configured individually for each of the parameters constituting Equation 1.

The embodiments have been described as discerning and applying each parameter constituting Equation 1 according to the type of the symbol. These embodiments may be applied independently, or two or more embodiments may be combined and applied.

According to the embodiments described above, the transmission power of an uplink control channel may be efficiently adjusted in a slot or symbol to which full-duplex communication is applied.

Hereinafter, embodiments related to a method for transmitting/receiving a physical uplink control channel (PUCCH) in full-duplex communication will be described in detail with reference to the related drawings.

The disclosure introduces an uplink transmission power control method for supporting full-duplex communication in a wireless mobile communication system. In particular, the disclosure introduces a method for controlling an uplink control channel, i.e., PUCCH transmission power.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots according to the distribution ratio of uplink traffic and downlink traffic. However, this limitation of the uplink slot negatively affects coverage and latency. Full-duplex communication may be applied as a technology to address such issues.

Specifically, full-duplex communication is a technique in which a base station (e.g., gNB) simultaneously performs DL transmission and UL reception in the same radio resource. The UE side may simultaneously perform DL reception and UL transmission as well. In other words, both the base station and the UE may support full duplex. However, unlike the base station, for which self-interference cancellation is structurally easy, in the UE, DL reception performance is prone to be affected by self-interference of UL transmission signals. Therefore, it is generally considered that the base station operates in full-duplex communication and the UE operates in half-duplex communication. Further, a subband non-overlapping full duplex (which may also be referred to as SBFD or subband full duplex in the disclosure) method to reduce the influence of self-interference, where the base station simultaneously performs DL transmission and UL reception but performs transmission and reception with frequency resources discerned, rather than using the same resource may be primarily considered.

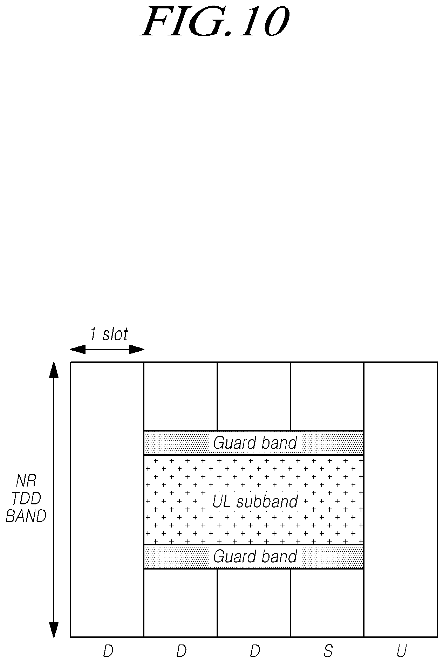

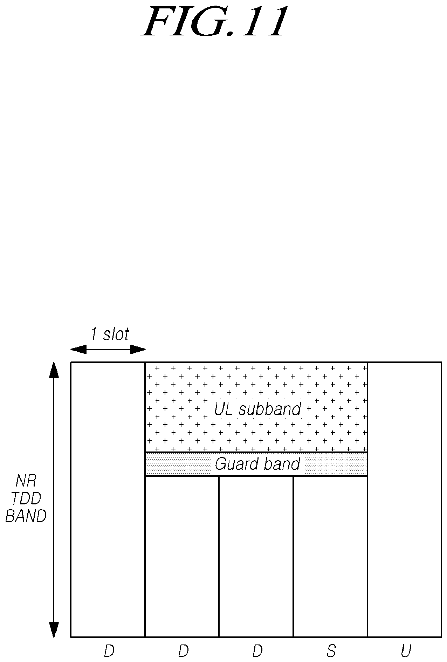

In other words, FIGS. 10 and 11 illustrate an example in which DL slots and UL slots are configured in a ratio of 4:1 in any NR frequency band. However, some symbols of the last DL slot may be a special slot including a flexible symbol for DL/UL transition. As described above, when a time division duplex (TDD) configuration is implemented, an uplink subband for supporting UL transmission of the UE may be configured in some (or all) DL slots of the corresponding DL slots. When the UL subband is set in any DL slot, the UL subband may be configured in the center of the corresponding frequency band as shown in FIG. 10, or the UL subband may be configured at the edge of the corresponding frequency band as shown in FIG. 11. In this case, a guard band may be configured between the UL subband and the downlink subband (DL subband) in the corresponding slot.

The disclosure introduces a method for configuring a BWP when any base station/network supports subband non-overlapping full duplex and accordingly transmitting/receiving radio channels (e.g., PDCCH/PDSCH and PUSCH/PUCCH) and uplink/downlink radio signals (DM-RS, CSI-RS, SRS, and PSS/SSS) of the base station and the UE. However, the description of the disclosure may be substantially identically applied to other various full-duplex application scenarios. For example, the full duplex application scenario may include a full duplex operation in an unpaired spectrum and a full duplex operation in a downlink (DL) frequency band or an uplink (UL) frequency band of a paired spectrum. Further, as described above, the description of the disclosure may be substantially identically applied to a scenario in which subband non-overlapping full duplex or pure full duplex (i.e., DL transmission and UL reception simultaneously in the same frequency resource) is supported only on the base station side, and a half duplex operation is performed in the UE. Further, the description of the disclosure may be substantially identically applied even when not only the base station but also the UE supports subband non-overlapping full duplex or pure full duplex.

The uplink-downlink (UL-DL) slot configuration defined in NR is defined to be performed in units of cells through cell-specific RRC signaling. In other words, patterns of DL symbols, UL symbols, and flexible symbols of a predetermined period are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Alternatively, a method for indicating a dynamic slot format through a UE-group common PDCCH has also been defined. To that end, NR also supports a slot format indication method in a dynamic form through DCI format 2_0.

According to the above-described slot configuration method, any one symbol may be configured or indicated as one of DL, UL, or Flexible. FIG. 10 illustrates an example in which any slot format is set as DDDSU through the existing slot configuration. D is a down link slot, which means that all OFDM symbols constituting the corresponding slot are set as DL. U is an uplink slot, which means that all OFDM symbols constituting the corresponding slot are set as UL. S is a special slot, which means a slot including a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within any one TDD carrier, one symbol was set or indicated as only one of DL, UL, or flexible.

However, when the UL subband is configured in any DL slot as shown in FIGS. 10 and 11, DL transmission or UL transmission may occur simultaneously for each frequency resource in the corresponding symbol. As described above, a DL slot or symbol including a UL subband or a UL slot or symbol including a DL subband will be referred to as an SBFD slot or an SBFD symbol in the disclosure.

Further, in the disclosure, a slot composed of only SBFD symbols is referred to as an SBFD slot, and a slot composed of only symbols according to the existing symbol configuration (i.e., a slot composed of only symbols not including a UL subband, a DL subband, and a guard band) is referred to as a non-SBFD slot. Alternatively, a slot including at least one SBFD symbol may be referred to as an SBFD slot.

Below is an introduced method for the UE to control corresponding PUCCH transmission power when the UE's PUCCH transmission is performed in the SBFD slot or SBFD symbol.

When any base station supports subband non-overlapping full duplex, as described above, PUCCH transmission through the corresponding UL subband may be performed in the SBFD symbol or SBFD slot in which the UL subband is configured. In other words, for any UE supporting SBFD operation in any cell/base station/network, PUCCH transmission may be indicated through the SBFD symbol or SBFD slot including the UL subband. Specifically, the PUCCH transmission through the SBFD symbol may include the UE's HARQ-ACK feedback information, scheduling request (SR) information, and CSI feedback information, and may further include all other uplink control information (UCI) that may be transmitted through PUCCH. The PUCCH transmission formats may include PUCCH formats 0, 1, 2, 3, and 4, and may also include all other PUCCH formats that may be transmitted through PUCCH.

A such, the base station may configure/indicate PUCCH transmission of the UE through the UL subband of the SBFD symbol. In this case, the uplink and downlink radio channel environment between the UE and the base station in the SBFD symbol may be different from the uplink and downlink radio channel environment between the UE and the base station in the existing non-SBFD symbol. In particular, since downlink transmission and uplink reception may occur simultaneously in the base station in the SBFD symbol, it is necessary to divide and operate the transmission/reception antennas and the RF modules of the base station for transmission and reception. Additionally, additional radio signal interference such as self-interference or crosslink interference may appear in the SBFD symbol. As a result, the uplink radio channel state from any one UE to the base station may also differ in the SBFD symbol and the non-SBFD symbol.

Considering this, the disclosure proposes defining a PUCCH transmission power adjustment equation through the existing non-SBFD symbol in any one UE and a PUCCH transmission power adjustment equation through a separate SBFD symbol. In other words, when UL subband (or DL subband) configuration is made for the SBFD operation in any cell/carrier for any SBFD-aware UE supporting SBFD, upon PUCCH transmission to the corresponding UE in the corresponding cell/carrier, a separate PUCCH transmission power adjustment equation may be applied for PUCCH transmission power configuration between PUCCH transmission in the non-SBFD symbol and PUCCH transmission in the SBFD symbol. In other words, a PUCCH transmission power adjustment equation through the existing UL symbol and a PUCCH transmission power adjustment equation through a separate SBFD symbol are defined. Accordingly, when any PUCCH transmission is performed through the non-SBFD symbols, the UE determines PUCCH transmission power based on the existing PUCCH transmission power adjustment equation and, when any PUCCH transmission is additionally performed through SBFD symbols, determines the PUCCH transmission power based on a new PUCCH transmission power adjustment equation.

According to the existing NR PUCCH transmission power control method, when any UE performs PUCCH transmission through any serving cell, carrier of c, active UL BWP of f, and slot i at b, the corresponding PUCCH transmission power was determined by Equation 2 below.

[Equation 2]

$$P_{\text{PUCCH}b,f,c}(i,q_u,q_d,l) = \min \left\{ \begin{array}{l} P_{\text{CMAX},f,c}(i), \\ P_{\text{O\_PUCCH}b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\}$$

[dBm]

In the above equation, $P_{CMAX,f,c}(i)$ in the first line is the maximum transmission power value defined for PUCCH transmission in the corresponding frequency carrier.

In the above equation, the transmission power adjustment equation in the second line includes a parameter related to open-loop power control, a parameter related to closed-loop power control, and parameters related to PUCCH transmission resource allocation amount, i.e., PUCCH transmission bandwidth and coding rate of uplink control information (UCI), and per-PUCCH format offset value.

$P_{O\_PUCCH,b,f,c}(q_u)$ means the target reception power at the base station. $PL_{b,f,c}(q_d)$ may be viewed as a parameter for pathloss compensation and means a downlink pathloss value measured using a specific downlink reference signal, $q_d$, as a reference. The two parameters may be viewed as open loop power control-related parameters.

$$g_{b,f,c}(i,l) = g_{b,f,c}(i-i_0,l) + \sum_{m=0}^{C(C_i)-1} \delta_{\text{PUCCH},b,f,c}(m,l)$$

On the other hand, , and may be viewed as a closed-loop power control parameter that is adjusted according to the transmit power control (TPC) command value indicated from the base station.

Further, $M_{\text{RB},b,f,c}^{\text{PUCCH}}(i)$ , $\Delta_{F\_PUCCH}(F)$ and $\Delta_{TF,b,f,c}(i)$ may be viewed as parameters reflecting the PUCCH bandwidth, per-PUCCH format power offset values, and coding rate.

## Embodiment 1.

$P_{CMAXF,f}(i)$, which is the maximum transmission power value for PUCCH transmission in the SBFD symbol, may be separately defined and set. In other words, in any carrier for any UE, the above-described $P_{CMAX,f,c}(i)$ value for the non-SBFD symbol and a $P_{CMAX,f,c,SBFD}(i)$ value for a separate SBFD symbol may be defined and be set by the base station. Accordingly, for any PUCCH transmission, if the corresponding PUCCH transmission is PUCCH transmission through non-SBFD symbol(s) typically, the UE may apply the $P_{CMAX,f,c}(i)$ value for the existing non-SBFD symbol in the above-described PUCCH transmission power adjustment equation to determine the corresponding PUCCH transmission power and, if any PUCCH transmission is PUCCH transmission through a new SBFD symbol, may apply separate $P_{CMAX,f,c,SBFD}(i)$ for PUCCH transmission power adjustment through the SBFD symbol.

## Embodiment 2.

A separate open-loop power control parameter or parameter set for PUCCH transmission through the SBFD symbol may be defined and separately set by the base station.

For example, a corresponding target reception power $P_{O\_PUCCH,b,f,c}(q_u)$ value may be separately defined for the SBFD symbol and set by the base station. In other words, any UE may define separate open-loop power control parameter or parameter set(s) for the SBFD symbol constituted of the existing $P_{O\_PUCCH,b,f,c}(q_u)$ value and $P_{O\_PUCCH,b,f,c,SBFD}(q_u)$ for the separate SBFD symbol. Accordingly, any UE may apply separate $P_{O\_PUCCH,b,f,c,SBFD}(q_u)$ when any PUCCH transmission is performed through the SBFD symbol.

Alternatively, for the downlink reference signal for pathloss measurement for the above-described pathloss compensation, it may be defined to measure pathloss based on separate reference signals in the SBFD symbol and the non-SBFD symbol. For example, it may be defined to separately set a reference signal for applying the reference signal, which is a reference for deriving the corresponding pathloss measurement value, $PL_{b,f,c}(qd)$, in the non-SBFD symbol and a reference signal for applying the same in the SBFD symbol. For example, when pathloss is set to be measured based on the CSI-RS for any UE, for the $PL_{b,f,c}(q_d)$ value for PUSCH transmission power adjustment through the non-SBFD symbol, the corresponding pathloss value may be defined to be measured only on the CSI-RS transmitted through the non-SBFD symbol. Meanwhile, for the $PL_{b,f,c}(q_d)$ value for PUSCH transmission power adjustment through the SBFD symbol, the corresponding pathloss value may be defined to be measured only on the CSI-RS transmitted through the SBFD symbol.

**Embodiment** 3.

The closed-loop power control-related process among the components constituting the equation corresponding to the second line in the above-described transmission power adjustment equation may be defined to be separately taken for the SBFD symbol and the non-SBFD symbol. In other words, when an SBFD operation is configured in any UE, the corresponding UE may define to additionally operate a power adjustment process by the TPC command for PUCCH transmission through the existing non-SBFD symbol and a power adjustment process by the TPC command for PUCCH transmission through a separate SBFD symbol. In other words, the TPC command for determining

$$g_{b,f,c}(i,l) = g_{b,f,c}(i-i_0,l) + \sum_{m=0}^{C(c_i)-1} \delta_{\mathrm{PUCCH},b,f,c}(m,l)$$

for PUCCH transmission power adjustment in the existing non-SBFD symbol and the TPC command for determining

$$g_{b,f,c,SBFD}(i,l) = g_{b,f,c,SBFD}(i-i_0,l) + \sum_{m=0}^{C(c_i)-1} \delta_{\mathrm{PUCCH},b,f,c,SBFD}(m,l)$$

for PUCCH transmission power adjustment in the SBFD symbol may be discerned and indicated to the UE. To that end, the DCI format including the TPC command for any PUCCH transmission may be configured to include an information area for discerning whether the corresponding TPC command is a TPC command value for PUCCH transmission power adjustment in the existing non-SBFD symbol or a TPC command value for PUCCH transmission power adjustment in the SBFD symbol, or to define a separate DCI format for the TPC command in the SBFD symbol and monitor the same by the UE.

For example, when a PUCCH TPC command indication is performed through DCI format 2_2 which is the UE-group common DCI format for the existing TPC command, or a PUCCH TPC command indication is performed through a UE-specific DCI format (e.g., DCI format 1_0, 1_1, 1_2, or 0_0, 0_1, 0_2), the corresponding DCI format may additionally include an information area for indicating whether it is a TPC command for PUCCH transmission in the non-SBFD symbol or a TPC command for PUCCH transmission in the SBFD symbol. As another method, a new DCI format 2_x for indicating the TPC command for PUCCH transmission in a new SBFD symbol may be additionally defined separately from existing DCI format 2_2 for indicating the TPC command for the existing non-SBFD symbol and be configured to be monitored by the UE.

Additionally, a power offset table controlled by the TPC command may also be separately defined. In other words, Table 3 may be defined which is separate to determine

$$g_{b,f,c,SBFD}(i,l) = g_{b,f,c,SBFD}(i-i_0,l) + \sum_{m=0}^{C(c_i)-1} \delta_{\mathrm{PUCCH},b,f,c,SBFD}(m,l)$$

determined according to the TPC command value in the SBFD symbol may be defined and a separate table for the same, in addition to Table 2 to determine

$$g_{b,f,c}(i,l) = g_{b,f,c}(i-i_0,l) + \sum_{m=0}^{C(c_i)-1} \delta_{\mathrm{PUCCH},b,f,c}(m,l)$$

according to the TPC command value in the existing non-SBFD symbol in the base station, as follows. Table 2 is a mapping table according to the TPC field for normal symbols (non-SBFD symbols), and Table 3 is a mapping table according to a separate TPC field for SBFD symbols. X1, Y1, Z1, W1 and X2, Y2, Z2, W2 in Table 3 are arbitrary numbers and may be composed of numbers separate from the corresponding numbers in Table 2.

[Table 2]

| TPC Command Field | Accumulated $\delta_{\mathrm{PUCCH},b,f,c}$ [dB] |
|---|---|
| 0 | -1 |
| 1 | 0 |
| 2 | 1 |
| 3 | 3 |

[Table 3]

| TPC Command Field | Accumulated $\delta_{PUCCH,b,f,c,SBFD}$ [dB] |
|---|---|
| 0 | x |
| 1 | Y |
| 2 | Z |
| 3 | W |

## Embodiment 4.

A separate power offset for PUCCH transmission in the SBFD symbol may be defined. The separate power offset may be defined to be included in the PUCCH transmission power adjustment equation. For example, $\Delta_{SBFD}$, which is a power offset value for the PUCCH transmission power in the SBFD symbol compared to the PUSCH transmission power adjustment in the non-SBFD symbol, may be defined to be included in the PUSCH transmission power adjustment equation. For example, the PUSCH transmission power adjustment equation in the SBFD symbol may be included in a form in which $\Delta_{SBFD}$, which is a power offset value, is added (or subtracted) as in Equation 3, or may be included in a form in which $\Delta_{SBFD}$, which is a power offset value, is multiplied by a predetermined ratio as in Equation 4.

[Equation 3]

$$P_{PUCCH,b,f,c}(i,q_u,q_d,l) = \min\left\{\begin{array}{l}P_{CMAX,f,c}(i),\\P_{O\_PUCCH,b,f,c}(q_u)+10\log_{10}(2^\mu \cdot M_{RB,b,f,c}^{PUCCH}(i))+PL_{b,f,c}(q_d)+\Delta_{F\_PUCCH}(F)+\Delta_{TF,b,f,c}(i)+g_{b,f,c}(i,l)\end{array}\right\}$$

$$+\Delta_{SBFD}$$

[Equation 4]

$$P_{PUCCH,b,f,c}(i,q_u,q_d,l) = \min\left\{\begin{array}{l}P_{CMAX,f,c}(i),\\P_{O\_PUCCH,b,f,c}(q_u)+10\log_{10}(2^\mu \cdot M_{RB,b,f,c}^{PUCCH}(i))+PL_{b,f,c}(q_d)+\Delta_{F\_PUCCH}(F)+\Delta_{TF,b,f,c}(i)+g_{b,f,c}(i,l)\end{array}\right\}$$

$$\cdot\Delta_{SBFD}$$

Alternatively, $\Delta_{SBFD}$ may be added (or subtracted) or multiplied by a predetermined ratio only for a specific item of the two items that are input to the min function. For example, $\Delta_{SBFD}$ may be added (or subtracted) or multiplied by a predetermined ratio only for the transmission power adjustment equation corresponding to the second line of the above equation. $\Delta_{SBFD}$, which is the power offset value for the PUCCH transmission power through the SBFD symbol compared to the PUCCH transmission power through the non-SBFD symbol described above may be set by the base station through UE-specific or cell-specific higher layer signaling, or may be defined as any fixed value.

All of the above embodiments have been described based on the symbol or the slot in the time axis. However, the embodiments may be applied substantially equally to various time resource units such as the subframe, the frame, and the like.

With regard to the above-described embodiments, each embodiment is included in the scope of the disclosure, not only in the case of being independent, but also in the case of all examples constituted of a combination of embodiments.

Hereinafter, configurations of a UE and a base station which may perform all or some of the embodiments described above in connection with FIGS. 1 to 11 will be described with reference to the drawings. The above-described description may be omitted to avoid redundant description. In that case, the omitted content may be applied in substantially the same manner to the following description as long as it does not go against the technical spirit of the disclosure.

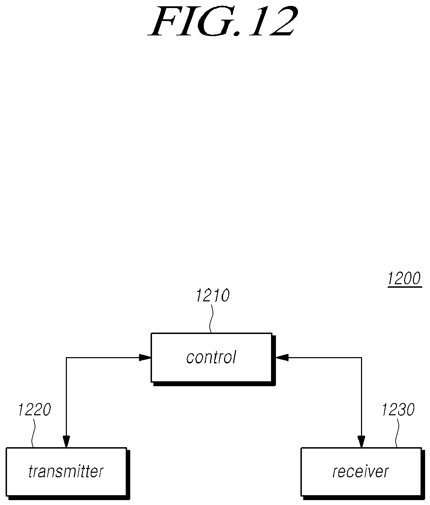

FIG. 12 is a block diagram illustrating a UE according to an embodiment.

Referring to FIG. 12, a UE 1200 according to an embodiment includes a transmitter 1220, a receiver 1230, and a controller 1210 controlling operations of the transmitter and the receiver.

The controller 1210 controls the overall operation of the UE 1200 according to the method for transmitting/receiving an uplink control channel in full-duplex communication required to the disclosure described above.

The controller 1210 may receive the SBFD symbol or information related to the configuration of the slot from the base station. The controller 1210 may configure the format of the slot accordingly. Since the related description has been made above in connection with FIG. 8, no further description will be presented below.

The controller 1210 may receive at least one power control parameter set used to determine transmission power of an uplink control channel from the base station. The control 1210 may be configured or instructed to transmit the uplink control channel The controller 1210 may determine the transmission power to transmit the uplink control channel according to the configuration or instruction of the base station. To that end, the controller 1210 may use at least one power control parameter set received from the base station.

When the transmission of the uplink control channel is scheduled through the slot i in the activation uplink bandwidth part b of the carrier f of the serving cell c to which the UE is connected, the transmission power of the uplink control channel may be determined by Equation 1 described above. The power control parameter set may include a parameter or a parameter set for each of the parameters constituting Equation 1. The description related to Equation 1 has been made above in connection with FIG. 8, and will be not repeated below.

The above-described parameters may be distinctly configured depending on whether the type of symbol for transmitting the uplink control channel is an SBFD symbol or a non-SBFD symbol. Therefore, the power control parameter set may include parameters or parameter sets for when the symbol is the SBFD symbol and when the symbol is the non-SBFD symbol.

The controller 1210 may determine the transmission power of the uplink control channel based on at least one power control parameter set and transmit the uplink control channel according to the determined transmission power.

The transmission power of the uplink control channel may be determined separately for when the symbol for transmitting the uplink control channel is the SBFD symbol and when the symbol is the non-SBFD symbol. In other words, the controller 1210 may determine the transmission power for transmitting the uplink control channel to differ depending on the type of the symbol allocated to transmission of the uplink control channel. To that end, the controller 1210 may determine the transmission power by selecting the parameter according to the type of the symbol for transmitting the uplink control channel from the parameter for when the symbol is the SBFD symbol included in the power control parameter set and the parameter for when the symbol is the non-SBFD symbol.

According to an embodiment, the transmission power of the uplink control channel may be determined based on the maximum PUCCH transmission power parameter configured separately for when it is the SBFD symbol and when it is the non-SBFD symbol. In other words, the maximum PUCCH transmission power parameter each may be configured for the type of the symbol for transmitting the uplink control channel and be included in one power control parameter set.

Accordingly, when the uplink control channel is transmitted in the non-SBFD symbol, the controller 1210 may determine the transmission power by applying the maximum transmission power value parameter corresponding to the non-SBFD symbol. When the uplink control channel is transmitted in the SBFD symbol, the controller 1210 may determine the transmission power by applying the maximum transmission power value parameter corresponding to the SBFD symbol.

According to another embodiment, the transmission power of the uplink control channel may be determined based on at least one open-loop power control parameter configured separately for when it is the SBFD symbol and when it is the non-SBFD symbol. In other words, the open-loop power control parameter each may be configured for the type of the symbol for transmitting the uplink control channel and be included in one power control parameter set.

As described above, the open-loop power control parameter may include the target reception power parameter in the base station. Further, the open-loop power control parameter may include a parameter for the downlink pathloss obtained by measuring a specific downlink reference signal.

Accordingly, when the uplink control channel is transmitted in the non-SBFD symbol, the controller 1210 may determine the transmission power by applying the open-loop power control parameter corresponding to the non-SBFD symbol. When the uplink control channel is transmitted in the SBFD symbol, the controller 1210 may determine the transmission power by applying at least one open-loop power control parameter corresponding to the SBFD symbol.

Further, the transmission power of the uplink control channel may be determined based on the pathloss measurement value for the reference signal configured separately for when it is the SBFD symbol and when it is the non-SBFD symbol. In other words, the reference signal that is the target for measuring pathloss may be configured to differ depending on the type of symbol.

In this case, the reference signal may be received through the same type of symbol as the symbol for transmitting the uplink control channel. For example, when CSI-RS is used as a reference signal, if the symbol for transmitting the uplink control channel is a non-SBFD symbol, the controller 1210 may measure pathloss only for the CSI-RS received through the non-SBFD symbol. If the symbol for transmitting the uplink control channel is the SBFD symbol, the controller 1210 may measure pathloss only for the received CSI-RS through the SBFD symbol.

According to another embodiment, the transmission power of the uplink control channel may be determined based on the closed-loop power control command indicated separately for when it is the SBFD symbol and when it is the non-SBFD symbol. In other words, at least one closed-loop power control command each may be configured for the type of the symbol for transmitting the uplink control channel and be included in one power control parameter set.

In this case, the closed-loop power control command may be indicated through a transmit power control (TPC) command each separately configured for when it is the SBFD symbol and when it is the non-SBFD symbol or through a TPC command including symbol type indication information. For example, the parameter determined by the TPC command may be used to determine the closed-loop power control-related parameter of Equation 1.

According to another embodiment, the transmission power of the uplink control channel may be determined based on a power offset value configured for when it is the SBFD symbol. In other words, the power offset value may be configured when the type of the symbol for transmitting the uplink control channel is the SBFD symbol and be included in one power control parameter set.

Accordingly, when the uplink control channel is transmitted in the non-SBFD symbol, the controller 1210 may determine the transmission power without applying a separate power offset value. When the uplink control channel is transmitted in the SBFD symbol, the controller 1210 may determine the transmission power by applying the power offset value corresponding to the SBFD symbol.

For example, when transmitting the uplink control channel in the SBFD symbol, the controller 1210 may add or subtract the power offset value to/from Equation 1. Alternatively, when transmitting the uplink control channel in the SBFD symbol, the controller 1210 may multiply the power offset value by Equation 1. Alternatively, when transmitting the uplink control channel in the SBFD symbol, the controller 1210 may apply the power offset value to at least one of the parameters constituting Equation 1. In this case, the power offset value may be configured individually for each of the parameters constituting Equation 1.

The embodiments have been described as discerning and applying each parameter constituting Equation 1 according to the type of the symbol. These embodiments may be applied independently, or two or more embodiments may be combined and applied.

According to the embodiments, the transmission power of an uplink control channel may be efficiently adjusted in a slot or symbol to which full-duplex communication is applied.

FIG. 13 is a block diagram illustrating a base station according to an embodiment.

Referring to FIG. 13, a base station 1300 according to an embodiment includes a transmitter 1320, a receiver 1330, and a controller 1310 controlling operations of the transmitter and the receiver.

The controller 1310 controls the overall operation of the base station 1300 according to the method for transmitting/receiving an uplink control channel in full-duplex communication required to the disclosure described above. The transmitter 1320 transmits downlink control information and data or messages to the UE via a corresponding channel. The receiver 1330 receives uplink control information and data or messages from the UE via a corresponding channel.

The controller 1310 may transmit information related to a configuration of a slot or SBFD symbol to the UE. In this case, the UE may configure the format of the slot using the corresponding information. Since the related description has been made above in connection with FIG. 9, no further description is presented below.

The controller 1310 may receive at least one power control parameter set used to determine transmission power of an uplink control channel to the UE. The controller 1310 may configure or instruct the UE to transmit the uplink control channel. The controller 1310 may determine the transmission power to transmit the uplink control channel according to the configuration or instruction of the base station. To that end, the controller 1310 may transmit at least one power control parameter set to be used for the UE to determine transmission power.

When the transmission of the uplink control channel is scheduled through the slot i in the activation uplink bandwidth part b of the carrier f of the serving cell c to which the UE is connected, the transmission power of the uplink control channel may be determined by Equation 1 described above. The power control parameter set may include a parameter or a parameter set for each of the parameters constituting Equation 1. The description related to Equation 1 has been made above in connection with FIG. 8, and will be not repeated below.

The above-described parameters may be distinctly configured depending on whether the type of symbol for transmitting the uplink control channel is an SBFD symbol or a non-SBFD symbol. Therefore, the power control parameter set may include parameters or parameter sets for when the symbol is the SBFD symbol and when the symbol is the non-SBFD symbol.

The controller 1310 may receive the uplink control channel according to the transmission power of the uplink control channel determined based on at least one power control parameter set.

The transmission power of the uplink control channel may be determined separately for when the symbol for transmitting the uplink control channel is the SBFD symbol and when the symbol is the non-SBFD symbol. In other words, the UE may determine the transmission power for transmitting the uplink control channel to differ depending on the type of the symbol allocated to transmission of the uplink control channel. To that end, the UE may determine the transmission power by selecting the parameter according to the type of the symbol for transmitting the uplink control channel from the parameter for when the symbol is the SBFD symbol included in the power control parameter set and the parameter for when the symbol is the non-SBFD symbol.

According to an embodiment, the transmission power of the uplink control channel may be determined based on the maximum PUCCH transmission power parameter configured separately for when it is the SBFD symbol and when it is the non-SBFD symbol. In other words, the controller 1310 may configure the maximum PUCCH transmission power parameter each for the type of the symbol for transmitting the uplink control channel and include and transmit the same in one power control parameter set.

Accordingly, when the uplink control channel is transmitted in the non-SBFD symbol, the UE may determine the transmission power by applying the maximum transmission power value parameter corresponding to the non-SBFD symbol. When the uplink control channel is transmitted in the SBFD symbol, the UE may determine the transmission power by applying the maximum transmission power value parameter corresponding to the SBFD symbol.

According to another embodiment, the transmission power of the uplink control channel may be determined based on at least one open-loop power control parameter configured separately for when it is the SBFD symbol and when it is the non-SBFD symbol. In other words, the controller 1310 may configure at least one open-loop power control parameter each for the type of the symbol for transmitting the uplink control channel and include and transmit the same in one power control parameter set.

As described above, the open-loop power control parameter may include the target reception power parameter in the base station. Further, the open-loop power control parameter may include a parameter for the downlink pathloss obtained by measuring a specific downlink reference signal.

Accordingly, when the uplink control channel is transmitted in the non-SBFD symbol, the UE may determine the transmission power by applying the open-loop power control parameter corresponding to the non-SBFD symbol. When the uplink control channel is transmitted in the SBFD symbol, the UE may determine the transmission power by applying at least one open-loop power control parameter corresponding to the SBFD symbol.

Further, the transmission power of the uplink control channel may be determined based on the pathloss measurement value for the reference signal configured separately for when it is the SBFD symbol and when it is the non-SBFD symbol. In other words, the reference signal that is the target for measuring pathloss may be configured to differ depending on the type of symbol.

In this case, the reference signal may be transmitted through the same type of symbol as the symbol through which the uplink control channel is received. For example, when CSI-RS is used as a reference signal, if the symbol for transmitting the uplink control channel is a non-SBFD symbol, the UE may measure pathloss only for the CSI-RS received through the non-SBFD symbol. If the symbol for transmitting the uplink control channel is the SBFD symbol, the UE may measure pathloss only for the received CSI-RS through the SBFD symbol.

According to another embodiment, the transmission power of the uplink control channel may be determined based on the closed-loop power control command indicated separately for when it is the SBFD symbol and when it is the non-SBFD symbol. In other words, the controller 1310 may configure at least one closed-loop power control command each for the type of the symbol for transmitting the uplink control channel and include and transmit the same in one power control parameter set.

In this case, the closed-loop power control command may be indicated through a transmit power control (TPC) command each separately configured for when it is the SBFD symbol and when it is the non-SBFD symbol or through a TPC command including symbol type indication information. For example, the parameter determined by the TPC command may be used to determine the closed-loop power control-related parameter of Equation 1.

According to another embodiment, the transmission power of the uplink control channel may be determined based on a power offset value configured for when it is the SBFD symbol. In other words, the controller 1310 may configure the power offset value when the type of the symbol for transmitting the uplink control channel is the SBFD symbol and include and transmit the same in one power control parameter set.

Accordingly, when the uplink control channel is transmitted in the non-SBFD symbol, the UE may determine the transmission power without applying a separate power offset value. When the uplink control channel is transmitted in the SBFD symbol, the UE may determine the transmission power by applying the power offset value corresponding to the SBFD symbol.

For example, when transmitting the uplink control channel in the SBFD symbol, the UE may add or subtract the power offset value to/from Equation 1. Alternatively, when transmitting the uplink control channel in the SBFD symbol, the UE may multiply the power offset value by Equation 1. Alternatively, when transmitting the uplink control channel in the SBFD symbol, the UE may apply the power offset value to at least one of the parameters constituting Equation 1. In this case, the power offset value may be configured individually for each of the parameters constituting Equation 1.

The embodiments have been described as discerning and applying each parameter constituting Equation 1 according to the type of the symbol. These embodiments may be applied independently, or two or more embodiments may be combined and applied.

According to the embodiments described above, the transmission power of an uplink control channel may be efficiently adjusted in a slot or symbol to which full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

**Claims**

1. A method, performed by a user equipment (UE), of transmitting a physical uplink control channel (PUCCH) in full-duplex communication, the method comprising:

    receiving at least one power control parameter set used to determine transmission power of the PUCCH from a base station;
    determining the transmission power of the PUCCH based on the at least one power control parameter set; and
    transmitting the PUCCH according to the determined transmission power,
    wherein the transmission power of the PUCCH is separately determined for a case where a symbol for transmitting the PUCCH is a subband full duplex (SBFD) symbol and a case where the symbol is a non-SBFD symbol.

2. The method of claim 1, wherein the transmission power of the PUCCH is determined based on a maximum PUCCH transmission power parameter separately configured for the case where the symbol is the SBFD symbol and the case where the symbol is the non-SBFD symbol.

3. The method of claim 1, wherein the transmission power of the PUCCH is determined based on at least one open-loop power control parameter separately configured for the case where the symbol is the SBFD symbol and the case where the symbol is the non-SBFD symbol.

4. The method of claim 1, wherein the transmission power of the PUCCH is determined based on a pathloss measurement value for a reference signal separately configured for the case where the symbol is the SBFD symbol and the case where the symbol is the non-SBFD symbol.

5. The method of claim 4, wherein the reference signal is received through a symbol of the same type as the symbol for transmitting the PUCCH.

6. The method of claim 1, wherein the transmission power of the PUCCH is determined based on a closed-loop power control command separately indicated for the case where the symbol is the SBFD symbol and the case where the symbol is the non-SBFD symbol.

7. The method of claim 6, wherein the closed-loop power control command is indicated through a transmit power control (TPC) command separately configured for the case where the symbol is the SBFD symbol and the case where the symbol is the non-SBFD symbol or through a TPC command including symbol type indication information.

8. The method of claim 1, wherein the transmission power of the PUCCH is determined based on a power offset value configured for the case where the symbol is the SBFD symbol.

9. A method, performed by a base station, of receiving a physical uplink control channel (PUCCH) in full-duplex communication, the method comprising:

transmitting, to a user equipment (UE), at least one power control parameter set used to determine transmission power of the PUCCH; and
receiving the PUCCH according to the transmission power of the PUCCH determined based on the at least one power control parameter set,
wherein the transmission power of the PUCCH is separately determined for a case where a symbol for receiving the PUCCH is a subband full duplex (SBFD) symbol and a case where the symbol is a non-SBFD symbol.

10. The method of claim 9, wherein the transmission power of the PUCCH is determined based on a maximum PUCCH transmission power parameter separately configured for the case where the symbol is the SBFD symbol and the case where the symbol is the non-SBFD symbol.

11. The method of claim 9, wherein the transmission power of the PUCCH is determined based on at least one open-loop power control parameter separately configured for the case where the symbol is the SBFD symbol and the case where the symbol is the non-SBFD symbol.

12. The method of claim 9, wherein the transmission power of the PUCCH is determined based on a pathloss measurement value for a reference signal separately configured for the case where the symbol is the SBFD symbol and the case where the symbol is the non-SBFD symbol.

13. The method of claim 9, wherein the transmission power of the PUCCH is determined based on a closed-loop power control command separately indicated for the case where the symbol is the SBFD symbol and the case where the symbol is the non-SBFD symbol.

14. The method of claim 9, wherein the transmission power of the PUCCH is determined based on a power offset value configured for the case where the symbol is the SBFD symbol.

15. A user equipment (UE) transmitting a physical uplink control channel (PUCCH) in full-duplex communication, comprising:

a transmitter;
a receiver; and
a controller controlling an operation of the transmitter and the receiver, wherein the controller:

receives at least one power control parameter set used to determine transmission power of the PUCCH from a base station;
determines the transmission power of the PUCCH based on the at least one power control parameter set; and
transmits the PUCCH according to the determined transmission power,
wherein the transmission power of the PUCCH is separately determined for a case where a symbol for transmitting the PUCCH is a subband full duplex (SBFD) symbol and a case where the symbol is a non-SBFD symbol.

# FIG.1

# FIG.2

One frame, $T_{frame} = 10ms$

One subframe, $T_{subframe} = 1ms$

| #0 | #1 | #2 | #3 | #4 | #5 | #6 | #7 | #8 | #9 |

$\Delta f = 15kHz$

One slot, 1ms

$\Delta f = 30kHz$

One slot, 0.5ms

$\Delta f = 60kHz$

One slot, 0.25ms

$\Delta f = 120kHz$

One slot, 0.125ms

$\Delta f = 240kHz$

One slot, 0.0625ms

EP 4 507 403 A1

*FIG.3*

Carrier bandwidth

One subframe

Resource grid, 2deltaf

Resource grid, deltaf

One resource black–12 subcarriers, subcarrier spacing 2deltaf

One resource black–12 subcarriers, subcarrier spacing 2deltaf

*FIG.4*

# FIG.5

# *FIG.6*

TERMINAL(UE)                    BASE STATION(gNB)

Preamble(PRACH) →

← RA Response(RAR)

"Message 3" →

Collision resolution {

← "Message 4"

# FIG.7

CORESET #4

CORESET #3

CORESET #2

CORESET #1

one slot

# *FIG.8*

<u>800</u>

```
                    ┌──────────┐
                    │  start   │
                    └──────────┘
                         │
                         ▼
┌──────────────────────────────────────────────────┐
│      receive power control parameter set          │──── S810
└──────────────────────────────────────────────────┘
                         │
                         ▼
┌──────────────────────────────────────────────────┐
│  determine transmission power of uplink control   │──── S820
│                    channel                         │
└──────────────────────────────────────────────────┘
                         │
                         ▼
┌──────────────────────────────────────────────────┐
│          transmit uplink control channel          │──── S830
└──────────────────────────────────────────────────┘
                         │
                         ▼
                    ┌──────────┐
                    │   end    │
                    └──────────┘
```

# FIG.9

_900_

```
        ┌──────────────┐
        │    start     │
        └──────┬───────┘
               │
               ▼
┌──────────────────────────────────────┐
│  transmit power control parameter set │──── S910
└──────────────────┬───────────────────┘
                   │
                   ▼
┌──────────────────────────────────────┐
│     receive uplink control channel    │──── S920
└──────────────────┬───────────────────┘
                   │
                   ▼
        ┌──────────────┐
        │     end      │
        └──────────────┘
```

# FIG.10

# FIG.11

# FIG.12

# FIG.13

## EUROPEAN SEARCH REPORT

Application Number

EP 24 19 3740

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUNGBUM KIM ET AL: "On SBFD for NR duplex evolution", 3GPP DRAFT; R1-2305512; TYPE DISCUSSION; FS_NR_DUPLEX_EVO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Incheon, KR; 20230522 - 20230526 15 May 2023 (2023-05-15), XP052310945, Retrieved from the Internet: URL:https://www.3gpp.org/ftp/TSG_RAN/WG1_RL1/TSGR1_113/Docs/R1-2305512.zip R1-2305512 SBFD final.docx [retrieved on 2023-05-15] * the whole document * | 1-15 | INV. H04W52/38 |
| X | WO 2021/253047 A1 (QUALCOMM INC [US]) 16 December 2021 (2021-12-16) * paragraph [0057] - paragraph [0221]; figures 4A-C, 5, 6A-B, 7 * | 1-15 | |
| A | US 2020/374807 A1 (ZHANG LILI [CN]) 26 November 2020 (2020-11-26) * the whole document * | 1-15 | |

TECHNICAL FIELDS SEARCHED (IPC)

H04W

The present search report has been drawn up for all claims

| Place of search | Date of completion of the search | Examiner |
|---|---|---|
| The Hague | 9 December 2024 | Boetzel, Ulrich |

EPO FORM 1503 03.82 (P04C01)

**ANNEX TO THE EUROPEAN SEARCH REPORT
ON EUROPEAN PATENT APPLICATION NO.**

EP 24 19 3740

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | Publication date | Patent family member(s) | | Publication date |
|---|---|---|---|---|
| WO 2021253047 A1 | 16-12-2021 | CN | 115702587 A | 14-02-2023 |
| | | EP | 4165913 A1 | 19-04-2023 |
| | | US | 2021392674 A1 | 16-12-2021 |
| | | US | 2023337251 A1 | 19-10-2023 |
| | | WO | 2021253047 A1 | 16-12-2021 |
| US 2020374807 A1 | 26-11-2020 | CN | 110248402 A | 17-09-2019 |
| | | EP | 3739970 A1 | 18-11-2020 |
| | | US | 2020374807 A1 | 26-11-2020 |
| | | WO | 2019170106 A1 | 12-09-2019 |

EPO FORM P0459

For more details about this annex : see Official Journal of the European Patent Office, No. 12/82

**EP 4 507 403 A1**

REFERENCES CITED IN THE DESCRIPTION

**Patent documents cited in the description**

- KR 1020230105804
- KR 1020240100365